# EUROPEAN PATENT SPECIFICATION

(11) **EP 0 253 426 B1**
(45) Date of publication and mention of the grant of the patent: **31.03.1993**
(21) Application number: 87201225.7
(22) Date of filing: 25.06.1987
(51) Int. Cl.: G02B 6/38

(54) **Connector for the detachable connection of light conducting fibres**
Steckverbindung für Lichtwellenleiter
Connecteur pour une connexion détachable de fibres optiques

(30) Priority: 16.07.1986 NL 8601855
(43) Date of publication of application: 20.01.1988
(73) Proprietor: Philips Electronics N.V., 5621 BA Eindhoven (NL)
(72) Inventor: Vroomen, Laurentius Cornelis Johannes, NL-5656 AA Eindhoven (NL); Van Esdonk, Johannes, NL-5656 AA Eindhoven (NL); Khoe, Giok Djan, NL-5656 AA Eindhoven (NL); Swemmers, Antonius Hendrikus Maria, NL-5656 AA Eindhoven (NL)
(74) Representative: Veenstra, Gustaaf

(56) References cited:
- EP-A- 0 080 722
- US-A- 4 272 154
- PATENT ABSTRACTS OF JAPAN, vol. 8, no. 121 (P-278)[1558], 7th June 1984; & JP-A-59 28 110
- PATENT ABSTRACTS OF JAPAN, vol. 3, no. 38, 30th March 1979, page 156 E101; & JP-A-54 17 860
- IBM TECHNICAL DISCLOSURE BULLETIN, vol. 24, no. 2, July 1981, pages 1151-1153, New York, US; L. BALLIET et al.: "Rugged, low cost, coined connector with lightly polished ends"

## Description

The invention relates to a connector for the detachable connection of fibres, comprising two coupling elements in each of which end parts of at least two optical fibres are secured beside each other so as to be mutually in parallel in such a manner that the centres of their end faces are situated on one line in an end face of the coupling element, as well as a connector housing for receiving the two coupling elements in such a manner that their end faces engage each other, the coupling elements and the connector housing comprising aligning means to ensure that the end parts of the fibres are located end to end and coaxially.

Such a connector is known, for example, from US-A-4,272,154. In order to minimise the light losses in the connector it is of importance that the light conducting cores of the end parts of each pair of fibres to be coupled together should become located exactly in the elongation of each other. For this purpose it is necessary for the centres of the end faces of the fibres in each of the coupling elements to be situated on one line with equal mutual distances. A second condition for a low-loss coupling is that the lines on which the centres of the fibre end faces in the two coupling elements are located, become located exactly parallel in the connector housing and that the mutual positions of at least one pair of fibre end parts to be coupled together are good. The positions of the other fibre end parts then are automatically good. In the known connector the optical fibres are situated on a flat surface in the coupling element and their position is determined by grooves in a cover plate placed on said surface. A part of the flat surface not covered by the cover plate and a side face of the cover plate together with two reference faces in the connector housing constitute the aligning means. The grooves and the side faces of the cover plates of two coupling elements to be secured together must be made together in one operation so as to ensure the desired accuracy. It is, therefore, not readily possible to secure together any pair of coupling elements from a store of coupling elements without loss of accuracy. Consequently, the known connector is not so suitable for use in large numbers.

It is an object of the invention to improve a connector of the type mentioned in the opening paragraph in such a manner that it is possible to manufacture coupling elements independently of each other and to secure any pair of said coupling elements together with a very great accuracy, so that an optimum pairwise coupling between the optical fibres is automatically ensured after the two coupling elements have been connected in the connector housing.

For that purpose the connector according to the invention is characterized in that in order to provide the aligning means
a) each coupling element comprises a cylindrical outer surface the axis of which coincides with the axis of the light conducting core of one of the fibre end parts secured in said coupling element and which is arranged to cooperate with a centring member of the connector housing so as to centre the coupling elements in the connector housing in such a manner that the two cylindrical outer surfaces are coaxial;
b) each coupling element comprises an orientation element which is arranged to cooperate with an orientation member of the connector housing so as to orient the coupling elements in the connector housing in such a manner that the lines on which the centres of the fibre end faces are located are mutually parallel;
c) the end face of each coupling element and the fibre end faces situated in said end face are polished so as to have the form of a cylindrical surface, the axis of which is parallel to the line on which the centres of the fibre ends are located.

The cylindrical outer surface constitutes a reference face the position of which is directly determined by the place of the light conducting core of one of the fibre end parts and does not depend, in contrast with the known connector, on the place of the corresponding reference face of another coupling element. When the two coupling elements are connected in the connector housing it is ensured that at least one pair of fibres is coupled optimally. Due to the orientation element and the orientation member it is also ensured that the lines on which the centres of the fibre end faces are located are accurately mutually in parallel so that all fibre pairs are coupled optimally. The two coupling elements are hence oriented with respect to each other in a system of cylinder coordinates, orientations according to the two coordinates being established independently of each other. In the known connector said orientations take place in combination in a system of rectangular coordinates.

A very reliable and simple method to form a cylindrical outer surface the axis of which coincides with the axis of the light conducting core of a fibre end part is described in US-A-4,289,374. For using this method it is favourable when the axis of the cylindrical outer surface of the coupling element, in the case of an odd number of pairs of fibres to be connected, coincides with the axis of the light conducting core of the central one of the fibre end parts secured in the coupling element and, in the case of an even number, coincides with the axis of the light conducting core of one of the two fibre end parts which are located immediately beside the centre of the row of fibre end parts secured in the coupling element.

A further embodiment of the connector according to the invention is characterized in that the orientation element is formed by a radial projection of the coupling element and the orientation member is formed by an axial slot in a wall of the connector housing. The projection may be provided on a ring which is placed around the coupling element and is rotated until the projection is, for example, accurately perpendicular to the line on which the centres of the fibre end faces are located. In this position the ring may be locked.

The invention will now be described in greater detail with reference to the drawing, in which
Figure 1 is a longitudinal sectional view of an embodiment of a coupling element for a connector according to the invention,
Figure 2 is an elevation of the end face of the coupling element shown in Figure 1,
Figure 3 is a perspective view of the coupling element,
Figure 4 is a longitudinal sectional view on a reduced scale of an embodiment of a connector according to the invention, and
Figure 5 is a plan view of the connector shown in Figure 4.

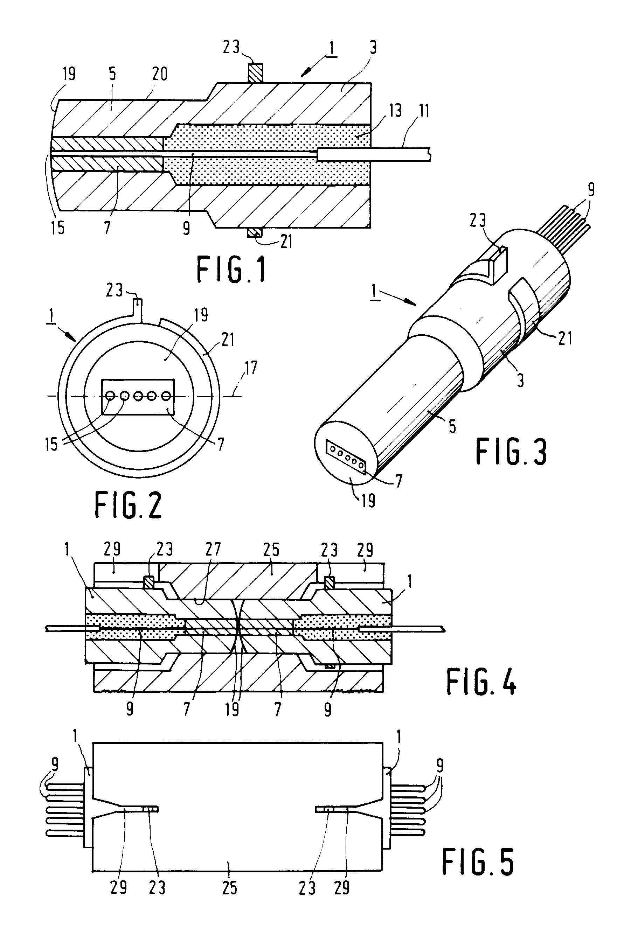

The coupling element 1 shown in Figures 1 to 3 comprises an envelope having a rear part 3 and a front part 5. These two parts are cylindrical and the diameter of the front part 5 is smaller than that of the rear part 3. A fibre holder 7 in which the end parts of, for example, five optical fibres 9 are placed parallel beside each other is connected in the front part 5. The fibre holder 7 has substantially the shape of a rectangular parallelepiped which consists of two plates which are placed against each other and of which at least one comprises parallel grooves for receiving the end parts of the fibres 9 the protective synthetic resin layer 11 of which has been removed. Examples of such fibre holders are described, for example, in EP-A-0,109,648 and the prior Netherlands Patent Application 8503409. The fibre holder 7 with the end parts of the fibres 9 connected therein has been inserted, for example, from the rear side (on the right in Figure 1) into the envelope 3, 5 and is bonded there. The rear part 3 of the envelope through which the fibres 9 extend to the exterior is filled with a moulding mass 13 of a suitable synthetic resin.

The optical fibres 9 on their front side (on the left in Figure 1) have end faces 15 the centres of which are situated on a straight line 17 (see Figure 2) in the end face 19 of the coupling element 1. The end faces 15 together with said end face are polished in such a manner that the assembly has the form of a cylindrical surface with a comparatively large radius of curvature the axis of which is parallel to the line 17. The cylindrical outer surface 20 of the front part 5 of the envelope of the coupling element 1 has then been finished, for example, according to the method described in US-A-4,289,374 so that the axis of said cylindrical surface coincides accurately with the axis of the light conductive core of the central one of the five fibre end parts. If the number of fibre end parts should be even (for example, four or six) there is no central fibre end part. In that case the axis of the cylindrical outer surface 20 is preferably made to coincide with the axis of the light conductive core of one of the two fibre ends which are situated immediately beside the centre of the row of fibre ends.

A ring 21 having a radial projection 23 is placed around the rear part 3 of the envelope of the coupling element 1. Said ring has been rotated so that the projection 23 is perpendicular to the line 17 and has then been fixed on the coupling element, for example, by welding it to the rear part 3, for example, by means of a laser. The projection 23 constitutes an orientation element.

Two coupling elements 1 can be placed in a connector housing 25 with their end faces 19 facing each other (see Figure 4). The connector housing 25 comprises a centring member 27 which in this example has the form of a hollow cylindrical sleeve in which the front parts 5 of the coupling elements fit accurately so that they become located with their axes in the elongation of each other. Of course it is also possible to provide the connector housing 25 with another centring member, for example a V-shaped groove with pressure means as described in US-A-4,478,485 or DE-A-3,208,779, a conical clamping sleeve as described in US-A-3,982,815 or a sleeve having three leaf springs as described in EP-A-0,185,413.

The connector housing 25 furthermore comprises two orientation members in the form of axial slots 29 in the wall of the connector housing. When the coupling elements 1 are inserted into the connector housing 25 the slots 29 guide the projections 23 so that the coupling elements are oriented in the connector housing in such a manner that the lines 17 are accurately mutually parallel. Of course it is also possible to orient the coupling elements 1 in the connector housing 25 in a different manner. For example, the orientation elements on each coupling element 1 may be formed by one or more flat side surfaces at the rear part 3 and the orientation member at the connector housing 25 by corresponding flat surfaces at the interior surface of the parts in which in the example described the slots 29 have been provided.

Due to the aligning means formed by the described centring and orientation means, the axes of each pair of coupled fibre end parts become located accurately in the elongation of each other. Due to the fact that the end faces 19 with the fibre end faces 15 have been polished so as to be slightly cylindrical in the manner described, the fibre end faces are located exactly against each other. All this has for its result that each pair of fibres 9 is coupled together optimally (that is to say with very small light losses, for example, 0.5 dB or less).

## Claims

1. A connector for the detachable connection of fibres, comprising two coupling elements (1) in each of which end parts of at least two optical fibres (9) are secured beside each other so as to be mutually in parallel in such a manner that the centres of their end faces (15) are situated on one line (17) in an end face (19) of the coupling element (1), as well as a connector housing (25) for receiving the two coupling elements (1) in such a manner that their end faces (19) engage each other, the coupling elements (1) and the connector housing (25) comprising aligning means to ensure that the end parts of the fibres are located end to end and coaxially, characterized in that in order to provide said aligning means,
a) each coupling element (1) comprises a cylindrical outer surface (20) the axis of which coincides with the axis of the light conducting core of one of the fibre end parts secured in said coupling element and which is arranged to cooperate with a centring member (27) of the connector housing (25) so as to centre the coupling elements (1) in the connector housing (25) in such a manner that the two cylindrical outer surfaces (20) are coaxial;
b) each coupling element (1) comprises an orientation element (23), which is arranged to cooperate with an orientation member (29) of the connector housing (25) so as to orient the coupling elements (1) in the connector housing (25) in such a manner that the lines (17) on which the centres of the fibre end faces are located are mutually parallel;
c) the end face (17) of each coupling element (1) and the fibre end faces (15) situated in said end face are polished so as to have the form of a cylindrical surface, the axis of which is parallel to the line (17) on which the centres of the fibre end faces are located.

2. A connector as claimed in Claim 1 for connecting an odd number of pairs of optical fibres (9), characterized in that the axis of the cylindrical outer surface (20) of the coupling element (1) coincides with the axis of the light conducting core of the central one of the fibre end part secured in the coupling element.

3. A connector as claimed in Claim 1 for connecting an even number of pairs of optical fibres (9), characterized in that the axis of the cylindrical outer surface (20) of the coupling element (1) coincides with the axis of the light conducting core of one of the two fibre end parts which are located immediately beside the centre of the row of fibre ends secured in the coupling element.

4. A connector as claimed in any of the claims 1-3, characterized in that the orientation element (23) is formed by a radial projection of the coupling element (1) and the orientation member (29) is formed by an axial slot in a wall of the connector housing (25).

## Patentansprüche

1. Steckverbindung zum lösbaren Verbinden von Fasern mit zwei Koppelelementen (1), in denen je Endteile mindestens zweier optischer Fasern (9) derart parallel zueinander nebeneinander befestigt sind, daß die Mitten der Endflächen (15) in einer Endfläche (19) des Koppelelementes (1) auf einer Linie (17) liegen, sowie mit einem Gehäuse (25) zum Aufnahmen der beiden Koppelelemente (1) derart, daß die Endflächen (19) miteinander zusammenarbeiten, wobei die Koppelelemente (1) und das Gehäuse (25) Ausrichtmittel aufweisen zur Gewährleistung davon, daß die Endteile der Fasern koaxial und gegeneinander liegen, dadurch gekennzeichnet, daß zum Schaffen der Ausrichtmittel:
a) jedes Koppelelement (1) eine Zylinderförmige Außenfläche (20) aufweist, deren Achse mit der Achse des Lichtleitkerns eines der in dem genannten Koppelelement befestigten Faserendteile zusammenfällt, und dazu vorgesehen ist mit einem Zentrierelement (27) des Gehäuses (25) zusammenzuarbeiten um die Koppelelemente (1) derart in dem Steckverbindungsgehäuse (25) zu zentrieren, daß die beiden zylinderförmigen Außenflächen (20) koaxial sind;
b) jedes Koppelelement (1) ein Ausrichtelement (23) aufweist zum Zusammenarbeiten mit einem Ausrichtglied (29) des Gehäuses (25) zum Ausrichten der Koppelelemente (1) in dem Gehäuse (25), derart, daß die Linien (17), auf denen die Mitten der Faserendflächen sich befinden, parallel zueinander sind;
c) die Endfläche (17) jedes Koppelelementes (1) und die in dieser Endfläche liegenden Faserendflächen (15) poliert sind so, daß sie die Form einer Zylinderfläche haben, deren Achse sich parallel zu der Linie (17) erstreckt, auf der die Mitten der Faserendflächen liegen.

2. Steckverbindung nach Anspruch 1 zum Verbinden einer ungeraden Anzahl Paare optischer Fasern (9), dadurch gekennzeichnet, daß die Achse der zylinderförmigen Außenfläche (20) des Koppelelementes (1) mit der Achse des in dem Koppelelement befestigten zentralen Lichtleitkerns zusammenfällt.

3. Steckverbindung nach Anspruch 1 zum Verbinden einer geraden Anzahl Paare optischer Fasern (9) dadurch gekennzeichnet, daß die Achse der zylinderförmigen Außenfläche (20) des Koppelelementes (1) mit der Achse des Lichtleitkerns eines der beiden Faserendteile zusammenfällt, die unmittelbar neben der Mitte der Reihe Faserendteile in dem Koppelelement liegen.

4. Steckverbindung nach einem der Ansprüche 1 bis 3, dadurch gekennzeichnet, daß das Ausrichtmittel (23) durch einen radialen Vorsprung des Koppelelementes (1) gebildet wird und das Ausrichtglied (29) durch einen axialen Schlitz in einer Wand des Gehäuses (25) gebildet wird.

## Revendications

1. Connecteur pour la connexion détachable de fibres, comportant deux éléments de couplage (1), dans chaque élément, dans chacun de ces deux éléments de couplage des parties terminales d'au moins deux fibres optiques (9) étant fixées mutuellement parallèles, l'une à côté de l'autre, de manière que les centres de leurs faces terminales (15) sont situés sur une ligne (17) dans une face terminale (19) de l'élément de couplage (1), ainsi qu'un boîtier de connecteur (25) pour recevoir les deux éléments de couplage (1), de mamière que leurs faces terminales (19) viennent se situer l'une contre l'autre, les éléments de couplage (1) et le boîtier de connecteur (25) comportant des moyens d'alignement pour assurer que les parties terminales des fibres optiques sont coaxiales et situées l'une contre l'autre, caractérisé en ce que, pour fournir lesdits moyens d'alignement,
a) chaque élément de couplage (1) comporte une surface extérieure cylindrique (20) dont l'axe coïncide avec l'axe de l'âme conducteur de lumière de l'une des parties terminales des fibres fixées dans ledit élément de couplage, et qui est conçue pour coopérer avec un organe de centrage (27) du boîtier de connecteur (25) pour centrer les éléments de couplage (1) dans le boîtier de connecteur (25), de manière que les deux surfaces extérieures cylindriques (20) soient coaxiales;
b) chaque élément de couplage (1) comporte un élément d'orientation (23) conçu pour coopérer avec un organe d'orientation (29) du boîtier de connecteur (25) pour orienter les éléments de couplage (1) dans le boîtier de connecteur (25), de manière que les lignes (17) sur lesquelles sont situés les centres des faces terminales des fibres soient mutuellement parallèles;
c) la face terminale (17) de chaque élément de couplage (1) et les faces terminales de fibre (15) situées dans ladite face terminale sont polies, de manière à présenter la forme d'une surface cylindrique dont l'axe est parallèle à la ligne (17) sur laquelle sont situés les centres des parties terminales de fibre.

2. Connecteur selon la revendication 1 pour connecter un nombre impair de paires de fibres optiques (9), caractérisé en ce que l'axe de la surface extérieure cylindrique (20) de l'élément de couplage (1) coïncide avec l'axe de l'âme conducteur de lumière de la partie centrale des parties terminales de fibre fixées dans l'élément de couplage.

3. Connecteur selon la revendication 1 pour connecter un nombre pair de paires de fibres optiques (9), caractérisé en ce que l'axe de la surface extérieure cylindrique (20) de l'élément de couplage (1) coïncide avec l'axe de l'âme conducteur de lumière de l'une des deux parties terminales de fibre situées immédiatement à côté du centre de la rangée de parties terminales de fibre fixées dans l'élément de couplage.

4. Connecteur selon l'une quelconque des revendications 1 à 3, caractérisé en ce que l'élément d'orientation (23) est formé par une saillie radiale de l'élément de couplage (1) et en ce que l'organe d'orientation (29) est formé par une fente axiale aménagée dans une paroi du boîtier de connecteur (25).
